# EUROPÄISCHE PATENTSCHRIFT

(11) **EP 1 355 854 B1**
(45) Veröffentlichungstag und Bekanntmachung des Hinweises auf die Patenterteilung: **04.08.2004**
(21) Anmeldenummer: 01990443.2
(22) Anmeldetag: 27.11.2001
(51) Int. Cl.: C01B 15/10

(54) **VERFAHREN ZUR SICHEREN LAGERUNG VON NATRIUMPERCARBONAT IN SCHÜTTGUTBEHÄLTERN**
METHOD FOR SECURELY PLACING SODIUM PERCARBONATE IN BULK CONTAINERS
PROCEDE DE STOCKAGE SECURISE DE PERCARBONATE DE SODIUM DANS DES CONTENANTS A PRODUITS EN VRAC

(30) Priorität: 22.12.2000 DE 10064821
(43) Veröffentlichungstag der Anmeldung: 29.10.2003
(73) Patentinhaber: Degussa AG, 40474 Düsseldorf (DE)
(72) Erfinder: SCHEIBE, Michael, 63457 Hanau (DE); TRÄUMER, Dietmar, 2920 Kalmthont (BE); KOHLEN, Rainer, 61273 Wehrheim (DE); LEONHARDT, Wolfgang, Dr., 60487 Frankfurt (DE); KAISER, Lothar, 79618 Rheinfelden (DE)
(86) Internationale Anmeldenummer: PCT/EP2001/013785
(87) Internationale Veröffentlichungsnummer: WO 2002/051746

(56) Entgegenhaltungen:
- EP-A- 0 396 175
- US-A- 4 179 394
- PATENT ABSTRACTS OF JAPAN vol. 006, no. 114 (C-110), 25. Juni 1982 (1982-06-25) & JP 57 042510 A (MITSUBISHI GAS CHEM CO INC), 10. März 1982 (1982-03-10) in der Anmeldung erwähnt

## Beschreibung

Die Erfindung richtet sich auf ein Verfahren zur sicheren Lagerung von Natriumpercarbonat in einem gegenüber der Umgebungsatmosphäre im wesentlichen geschlossenen Schüttgutbehälter.

Die Sicherheit bei der Lagerung von Natriumpercarbonat in Schüttgutbehältern, wie stationären und transportablen Schüttgutcontainern, Siloanlagen und Schüttgutbunkern, erfordert aufgrund der selbstzersetzlichen Eigenschaften besondere Aufmerksamkeit. Die selbstzersetzlichen Eigenschaften von Natriumpercarbonat können bei der Lagerung in einem Silo zu einer Produkterwärmung bis hin zu einer unkontrollierten thermischen Zersetzung führen. Natriumpercarbonat zerfällt hierbei in einer exothermen Reaktion zu Soda, Wasser und Sauerstoff. Wie die Erfinder der vorliegenden Anmeldung feststellten, kann es je nach den Lagerbedingungen in einem Silo, insbesondere bei erhöhter Lagertemperatur, zu einem schnellen Temperaturanstieg kommen, so dass am Ende der Zersetzungsreaktion Maximaltemperaturen von 150 bis 180 °C gemessen werden.

Es ist zwar bekannt, dass Natriumpercarbonat zum Zwecke der Stabilisierung des Produktes in Gegenwart von Waschmittelbestandteilen, wie Zeolithen, mit einer oder mehreren stabilisierend wirkenden Hüllschichten umgeben wird, jedoch hat diese Umhüllung nur einen begrenzten Einfluss auf die selbstzersetzlichen Eigenschaften von Natriumpercarbonat. Der Begriff Natriumcarbonat im Zusammenhang mit dem erfindungsgemäßen Verfahren umfasst somit sowohl nicht-umhülltes Natriumpercarbonat, das nach einem beliebigen Verfahren hergestellt wurde, beispielsweise nach einem Kristallisations- oder einem Wirbelschicht-Sprühgranulationsverfahren, als auch umhülltes Natriumpercarbonat mit einer oder mehreren stabilisierenden Hüllschichten, wobei die Hüllschichten eine oder mehrere stabilisierend wirkende Komponenten enthalten können, wie beispielsweise Alkalisulfate, Natriumcarbonat, Natriumbicarbonat, Wasserglas, Borate und Perborate, Magnesiumsulfat, Magnesiumsalze von Carbonsäuren.

Die JP-Offenlegungsschrift 57-42510 lehrt ein Verfahren zur Lagerung von Natriumpercarbonat, wobei im Lagerbehälter bei einer relativen Feuchtigkeit von höchstens 70 % Kühlluft mit einer Temperatur, die maximal in Höhe normaler Raumtemperatur liegt, zugeführt wird und bei der Kühlung der Natriumpercarbonatteilchen gleichzeitig die Atmosphäre im Lagerbehälter durch die jeweilige Kühlluft ersetzt wird. Ziel dieses Verfahrens ist es, Natriumpercarbonat, das mit erhöhter Temperatur aus einem Trockner in den Lagerbehälter überführt wird und sich damit in einer Atmosphäre mit hoher relativer Luftfeuchtigkeit befindet, zu stabilisieren. Durch das Durchleiten von Kühlluft durch das im Silo gelagerte Produkt kommt es zu einer Abkühlung des Siloinhalts und gleichzeitig wird der Wassergehalt herabgesetzt. Auf diese Weise werden die Lagerfähigkeit erhöht und die Neigung zum Zusammenklumpen vermindert. Diesem Dokument lassen sich aber keine Anregungen entnehmen, wie Natriumpercarbonat ohne Sicherheitsrisiko in einem großem Silo über einen längeren Zeitraum gelagert werden kann. Offensichtlich wurden die Probleme einer unter Wärmefreisetzung erfolgenden Selbstzersetzung von Natriumpercarbonat in einem Lagerbehälter nicht erkannt und demgemäß auch keine Problemlösung vorgeschlagen.

Das EP-Patent 0 396 175 B1 richtet sich auf ein Verfahren zur Haltbarmachung von Natriumperboratmonohydrat-Körnchen, das in einem dichten Raum zwischen 10 und 65 °C in loser Schüttung gelagert wird. Hierbei wird während der gesamten Dauer der Lagerung trockene Luft durch das Lagergut geleitet. Der Taupunkt der trockenen Luft soll hierbei insbesondere unterhalb -20 °C und die Menge an trockener Luft zwischen 1 und 8 Nm³/(h · t_{NaPc}) liegen. Dieses Dokument gibt keine Anregung, das Verfahren auch auf die Lagerung von Natriumpercarbonat in einem Silo zu übertragen. Nachteile dieses Verfahrens sind, dass während der gesamten Lagerzeit trockene Luft mit einem sehr niedrigen Taupunkt in großer Menge durch das Lagergut geleitet werden muss.

Aufgabe der vorliegenden Erfindung ist demgemäß, ein Verfahren zur sicheren Lagerung von Natriumpercarbonat (NaPc), worunter auch umhülltes Natriumpercarbonat verstanden wird, in Schüttgutbehältern, insbesondere großen Siloanlagen, bereitzustellen. Das Verfahren sollte es ermöglichen, in wirtschaftlicher Weise die Stabilität des Natriumpercarbonats während der Lagerzeit möglichst konstant zu halten, insbesondere aber durch Selbsterwärmung innerhalb des Lagerbehälters verursachte kritische Lagerzustände zu vermeiden und im Falle ihres Auftretens zuverlässig abzufangen.

Das erfindungsgemäße Verfahren löst diese und weitere Aufgaben, wie sie sich aus der weiteren Beschreibung ergeben.

Gefunden wurde ein Verfahren zur sicheren Lagerung von Natriumpercarbonat in einem gegenüber der Umgebungsatmosphäre im wesentlichen geschlossenen Schüttgutbehälter, das dadurch gekennzeichnet ist, dass man an mindestens einer Stelle innerhalb des in loser Schüttung gelagerten Natriumpercarbonats die Temperatur misst und bei einer Temperatursteigerung im Bereich von 0,5 bis 10 °C pro Tag, insbesondere 1 bis 5 °C pro Tag, Trockenluft mindestens so lange periodisch oder kontinuierlich durch die Schüttung leitet, bis die Temperatursteigerung auf einen Wert von weniger als 1 °C pro Tag abgesunken ist.

Wie bereits eingangs ausgeführt, eignet sich das Verfahren zur Lagerung von nicht-umhülltem Natriumpercarbonat als auch von mit einer oder mehreren Hüllschichten umhüllton Natriumpercarbonat. Üblicherweise wird das Natriumpercarbonat bei einer mittleren Lagertemperatur unter 40 °C, insbesondere bei 15 bis 30 °C, gelagert. Eine Lagertemperatur oberhalb 40 °C ist weniger zweckmäßig, da hierbei die Menge von Trockenluft erhöht und/oder der Taupunkt derselben erniedrigt werden müssen, wodurch die Wirtschaftlichkeit des Verfahrens sinkt. Bei einer Lagertemperatur unter 15 °C ist sicherzustellen, dass es innerhalb des Lagerbehälters zu keinen Kondensationserscheinungen und in deren Folge zu einer beschleunigten Selbsterwärmung kommt.

Bei den Lagerbehältern kann es sich um stationäre oder transportable, senkrecht oder horizontal angeordnete Lagerbehälter, wie Bunker und Silos, handeln. Das Volumen der Lagerbehälter liegt in der Regel über 10 m³; besonders bevorzugt handelt es sich bei den Lagerbehältern um senkrecht stehende Silos mit einem Schüttgutinhalt im Bereich von 10 bis 250 m³. Die durch den Lagerbehälter zu leitende Trockenluft wird an einer Seite, bei senkrechten Lagerbehältern im unteren Bereich, mittels einer oder mehreren Zuführvorrichtungen zugeführt und nach Passage durch das Lagergut an einer entgegengesetzten Seite abgeführt.

Innerhalb der Schüttung des Lagerguts wird an mindestens einer Stelle, vorzugsweise jedoch an mehreren Stellen, darunter an mindestens zwei zentralen Stellen in unterschiedlicher Höhe des Schüttgutbehälters, eine Temperaturmessung durchgeführt, da sich sowohl horizontal als auch vertikal verschiedene Temperaturgradienten ausbilden können. Die Messung der Temperatursteigerung pro Zeiteinheit wird zur Steuerung des Ein- und Ausschaltens sowie zur Regelung der Menge der Trockenluft verwendet.

Die Temperatur der durch das Schüttgut zu leitenden Trockenluft wird in der Regel um oder unterhalb der Soll-Lagertemperatur liegen. Demgemäß ist es vorteilhaft, eine Trockenluft mit einer Temperatur im Bereich von 15 bis 30 °C zu verwenden. Die Taupunktstemperatur der Trockenluft liegt vorzugsweise im Bereich von -20 °C bis +5 °C. Eine Taupunktstemperatur ausserhalb dieses Bereichs ist zwar möglich, jedoch sind die Kosten zur Erzeugung einer Trockenluft mit einer Taupunktstemperatur unter -20 °C deutlich höher; bei einer Taupunktstemperatur oberhalb +5 °C muss dagegen die Luftmenge deutlich erhöht werden, um einen kritischen Lagerzustand zu vermeiden oder zuverlässig abzufangen.

Gemäß einer bevorzugten und insbesondere wirtschaftlichen Ausführungsform des Verfahrens wird bei einer Temperatursteigerung von 0,5 bis 2 °C pro Tag bei einer mittleren Lagertemperatur unter 25 °C eine spezifische Trockenluftmenge mit einer Taupunktstemperatur τ = -20 °C von weniger als 0,2 Nm³/(h · t_{NaPc}) durch das Lagergut geleitet. Bei einer mittleren Lagertemperatur im Bereich von 25 bis 30 °C und gleicher Taupunktstemperatur wird eine Trockenluftmenge im Bereich von 0,1 bis 0,3 Nm³/(h · t_{NaPc}) durch die Schüttung geleitet. Sobald die gewünschte Soll-Lagertemperatur wieder erreicht ist, kann das Durchleiten von trockener Luft beendet werden. Sofern eine Trockenluft mit einer Taupunktstemperatur von größer -20 °C zur Anwendung gelangt, wird die Trockenluftmenge pro °C Taupunktserhöhung oberhalb von -20 °C, um 0,01 bis 0,02 Nm³/(h · t_{NaPc}) erhöht.

Überraschenderweise lässt sich Natriumpercarbonat nach dem erfindungsgemäßen Verfahren auch in großen Silobehältern sicher lagern, indem bei einem durch Selbstzersetzung verursachten messbaren Temperaturanstieg Trockenluft solange durch das Schüttgut geleitet wird, bis die Temperatursteigerung wieder unterhalb des angestrebten Grenzwerts, insbesondere auf weniger als 0,5 °C pro Tag gefallen ist.

Überraschenderweise reicht eine geringe spezifische Trockenluftmenge aus, um eine sichere Lagerung zu gewährleisten. Im Gegensatz zum erfindungsgemäßen Verfahren war es nämlich in dem zuvor gewürdigten Verfahren des EP-Patents 0 396 175 erforderlich, während der gesamten Lagerdauer trockene Luft durch das Lagergut zu leiten. Die geringe Trockenluftmenge im erfindungsgemäßen Verfahren ist gegenüber dem auf die Lagerung von Natriumperboratmonohydrat gerichteten Verfahren auch deswegen überraschend, weil kritische Lagerzustände im Falle der Lagerung von Natriumpercarbonat, anders als bei Natriumperboratmonohydrat, nicht durch Schmelzen des Produktes abgefangen werden können. Zudem ist das autokatalytische Verhalten von Natriumpercarbonat gegenüber Natriumperboratmonohydrat als wesentlich kritischer anzusehen.

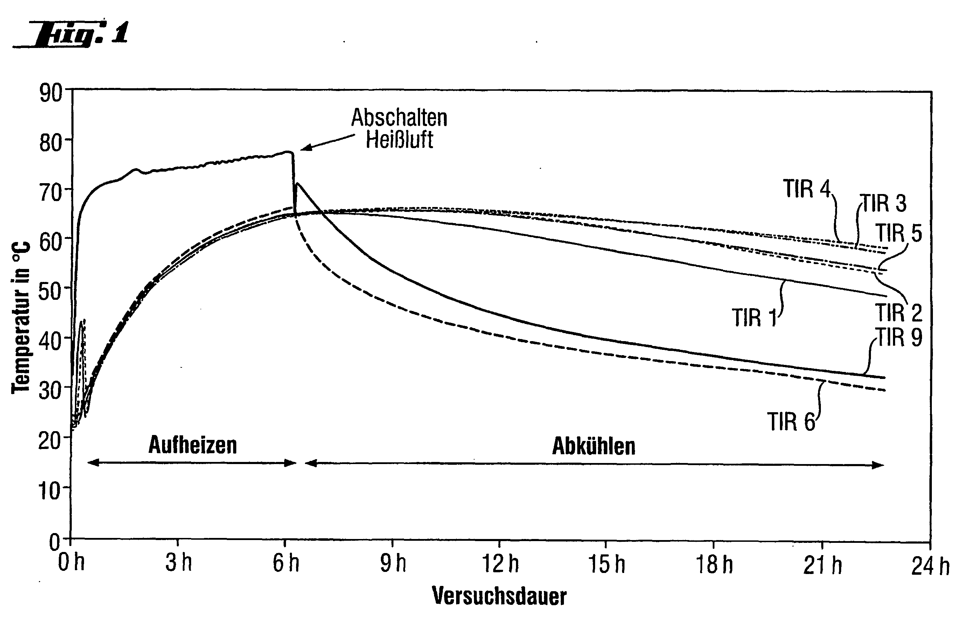

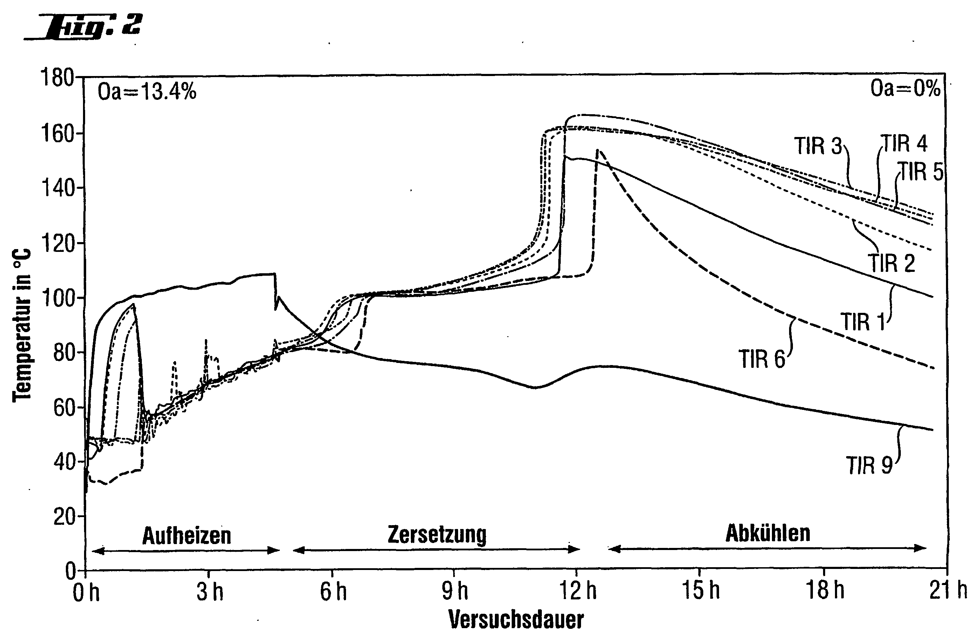

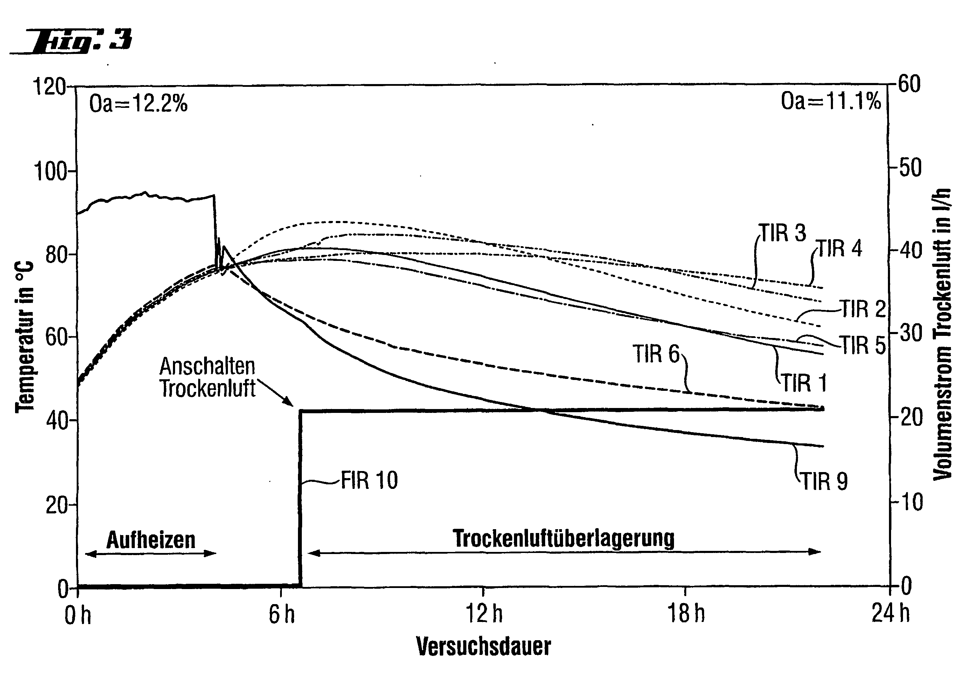

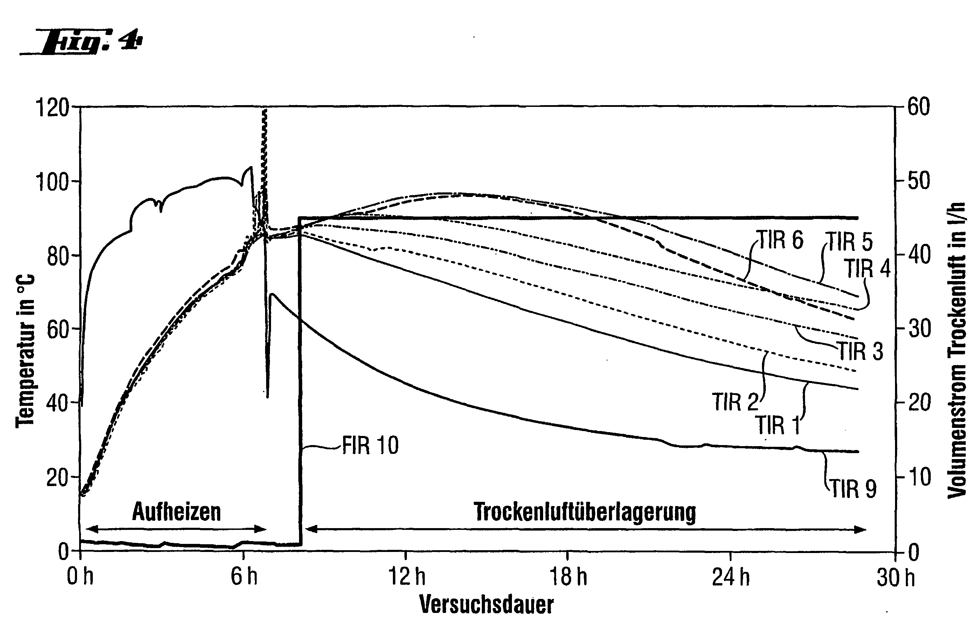

Die Figuren 1 bis 4 zeigen Aufheiz-Abkühl-Kurven in einem Versuchssilo bei unterhalb einer kritischen Starttemperatur (Fig. 1), oberhalb einer kritischen Starttemperatur (Fig. 2) sowie eine erfindungsgemäße Lagerung unter Einsatz einer Trockenluft mit τ = -20 °C (Fig. 3) bzw. τ = 0 °C (Fig. 4). Die Figuren werden im Beispielteil erörtert.

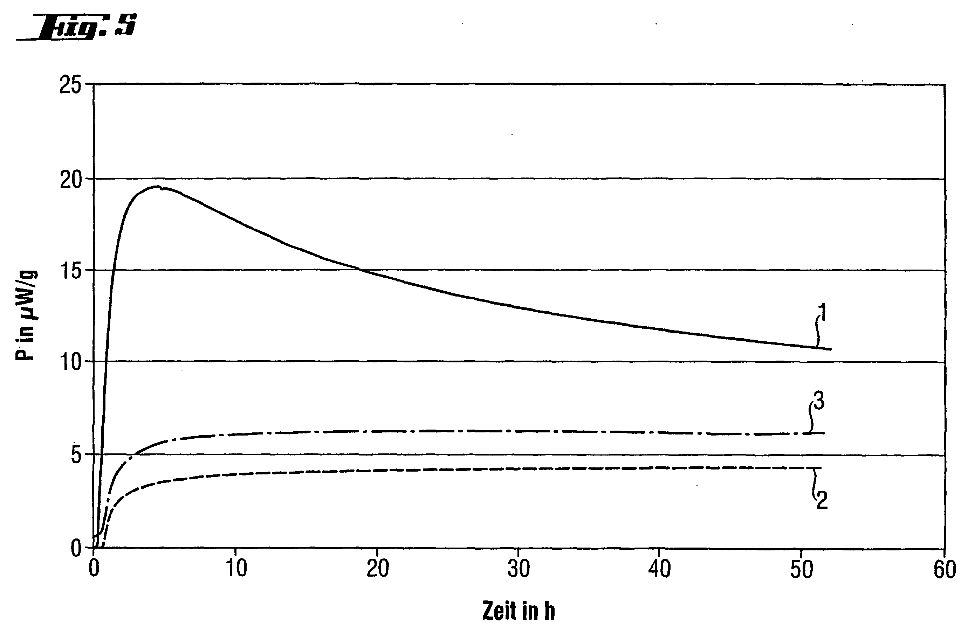

Es wurde ferner festgestellt, dass die innere Stabilität von Natriumpercarbonat während der Lagerung in einem Silo bei erhöhter Temperatur, jedoch unter gleichzeitigem Durchleiten trockener Luft zwecks erfindungsgemäßer Begrenzung der Temperatursteigerung signifikant erhöht wird. Dieser überraschende Effekt zeigt sich durch eine Abnahme des sogenannten TAM-Wertes (termal activity monitor): Ergebnis einer TAM-Messung ist eine spezifische Wärmeleistung, die der Stoff, hier also Natriumpercarbonat, bei der vorgegebenen Temperatur erzeugt. Wie die nachfolgenden Beispiele zeigen, nimmt die Wärmeerzeugung des Natriumpercarbonats nach erfindungsgemäßer Lagerung bei erhöhter Lagertemperatur ab. Dieser Befund ist in den Figuren 5 bis 7, welche im Beispielteil erörtert werden, dargestellt.

Ein wesentlicher Vorteil des erfindungsgemäßen Verfahrens besteht darin, dass die Lagerung von Natriumpercarbonat auch in großen Lagerbehältern ohne die Gefahr einer unkontrollierten Selbstzersetzung des Lagerguts möglich ist. Kritische Lagerzustände, also eine zu hohe Temperatursteigerungsrate mit der Gefahr einer Zersetzung des Natriumpercarbonats, lassen sich zuverlässig durch das Durchleiten trockener Luft durch das Lagergut abfangen. Die zum Abfangen erforderliche Luftmenge nimmt mit zunehmender Schüttguttemperatur und Erhöhung der Taupunktstemperatur der trockenen Luft zu. Unter Einhaltung der erfindungsgemäßen Lagerbedingungen bleibt die Qualität des gelagerten Natriumpercarbonats über einen langen Zeitraum im wesentlichen konstant. Durch das bedarfsgerechte Durchleiten von Trockenluft durch das im Lagerbehälter gelagerte Natriumpercarbonat wird die Feuchte im Produkt reduziert und so die Zersetzungsneigung abgeschwächt.

Während bisher bei der Silolagerung von Natriumpercarbonat streng darauf geachtet werden musste, dass das Silo bei einer erhöhten Temperatursteigerung rasch genug entleert werden konnte, um eine kritische Situation zu vermeiden, ist es durch die erfindungsgemäße Massnahme möglich, die Lagerung im Silo sicher zu gestalten und eine Zwangsentleerung zu vermeiden.

### Beispiele 1.1 bis 1.4

Die Untersuchung des Zersetzungsverhaltens von Natriumpercarbonat und das erfindungsgemäße Verfahren wurden in einem Versuchssilo durchgeführt. Der Silo umfasste einen zylindrischen Glasschuss (Ø = 0,3 m, . Höhe = 1 m, Wandstärke = ca. 10 mm) und darunter einen konischen Zuluftbereich. Letzterer und der zylindrische Schuss waren mit 40 mm starker Mineralwolle isoliert.

Für jeden Versuch wurde eine Füllung von 75 kg Natriumpercarbonat vorgelegt. Unter der Schüttung befand sich ein Belüftungsboden, durch welchen mittels heißer Luft der Siloinhalt auf die gewünschte Starttemperatur aufgeheizt werden konnte. Ebenfalls durch den Belüftungsboden erfolgte die kontrollierte Zugabe der Trockenluft während der Versuche. Die Trockenluftmenge wurde mittels eines. Massendurchflussreglers geregelt; die Überwachung der Temperaturen erfolgte mittels mehrerer zentral und in unterschiedlicher Höhe des Schüttguts angeordneter Temperaturmessvorrichtungen (TIR).
1.1 Bestimmung der Starttemperatur, bei welcher eine Zersetzung mit messbarem Temperaturanstieg überhaupt auftritt (nicht-erfindungsgemäß):
   Figur 1 zeigt einen typischen Verlauf einer Aufheiz-Abkühl-Kurve. Am Ende der Aufheizphase (nach 6 h) betrug die Temperatur des Produkts etwa 66 °C. Nach dem Abschalten kühlten sich der Zuluftbereich und der oberste Bereich (TIR 6) rasch ab. Die restlichen Temperaturmeßstellen (TIR 1-5) zeigten eine langsamere Abkühlung, wobei der anfängliche Anstieg der Temperaturen (TIR 2-4) nach dem Abschalten der Heißluft auf eine Zersetzung von Natriumpercarbonat zurückzuführen ist. Die Abkühlung des Silos ist stärker als die Zersetzung, so dass sich das Silo insgesamt abkühlt.
1.2 Versuch mit Selbsterwärmung und unkontrollierter Zersetzung im Silo (nicht-erfindungsgemäß): Wie die Aufheiz-Abkühl-Kurve der Figur 2 zeigt, wird bei einer Starttemperatur von etwa 80 °C im Silo (= Ende der Aufheizperiode) eine Zersetzung mit Temperaturanstieg erreicht. Durch eine beginnende Selbstzersetzung kommt es zunächst zu einem moderaten Temperaturanstieg, und danach beschleunigt sich die Selbsterwärmung, wobei ein Temperaturniveau von etwa 100 °C erreicht wird. Aufgrund der Wasserverdampfung tritt ein Haltepunkt auf, bevor nach etwa 12 h sehr schnell die eigentliche Zersetzungstemperatur von 160 °C erreicht wird. Der Oa-Gehalt (Aktivsauerstoffgehalt) sank von 13,4 % auf 0 % ab.
1.3 Erfindungsgemäße Lagerung mit Durchleiten von Trockenluft:
   Figur 3 zeigt eine Aufheiz-Abkühl-Kurve, wobei um ein Durchgehen des Silos zu vermeiden, Trockenluft mit einer Taupunktstemperatur von -20 °C in einer Menge von 20 Nl/h durch die 75 kg Schüttung Natriumpercarbonat im Silo geleitet wurde. Wie Figur 3 zeigt, kam es nach dem Ende der Aufheizperiode und vor dem Beginn des Durchleitens von Trockenluft an einigen Temperaturmeßstellen (insbesondere TIR 2), welche im untersten Viertel des Silos angeordnet war, noch zu einem weiteren Temperaturanstieg. Dieser Temperaturanstieg konnte nach Beginn der Durchleitung von Trockenluft nach 1-2 h sicher gestoppt werden.
1.4 Erfindungsgemäße Lagerung unter Verwendung von Trockenluft mit einem Taupunkt von 0 °C:
   Figur 4 zeigt die Aufheiz-Abkühl-Kurve bei erfindungsgemäßer Lagerung unter Einsatz von Trockenluft mit einem Taupunkt von 0 °C. Nach Beendigung der Aufheizperiode stieg die Temperatur in der Schüttung weiter an. Nach Beginn der Durchleitung der Trockenluft durch den Siloinhalt mit einer Trockenluftmenge von 45 Nl/h stieg die Temperatur in der Mitte (TIR 4) und im oberen Drittel (TIR 5) zunächst weiter an, sank dann aber wieder ab, so dass es zu keinen kritischen Zuständen kam; die Temperatur des Siloinhalts unterhalb der Mitte nahm unmittelbar nach Beginn der Trockenluftdurchleitung ab.

### Beispiele 2.1 bis 2.3

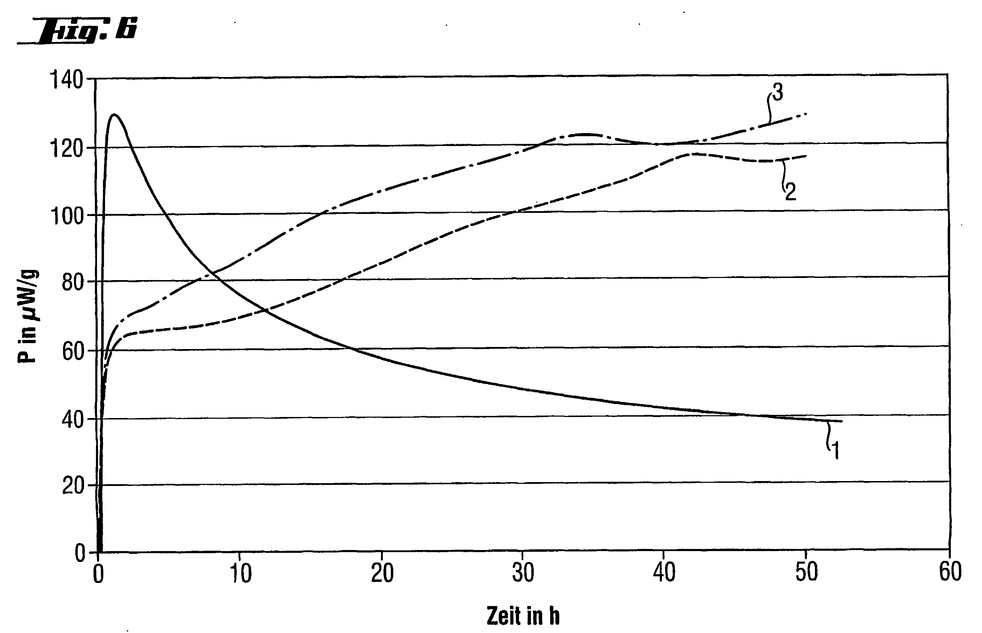

2.1 Ermittlung der TAM-Werte von Natriumpercarbonat im Vergleich zu Natriumperboratmonohydrat:
   Figur 5 zeigt Messkurven der TAM-Bestimmung bei 40 °C, wobei sich Kurve 1 auf Natriumperboratmonohydrat und die Kurven 2 und 3 auf zwei Muster Natriumpercarbonat beziehen. Die Wärmeleistung von Natriumperboratmonohydrat nimmt zu Beginn wesentlich stärker zu als jene von Natriumpercarbonat, sinkt dann aber wieder deutlich ab. Die Wärmeleistung der beiden Natriumpercarbonatproben bleibt nach einem ersten Anstieg auf niedrigerem Niveau im wesentlichen konstant.
2.2 Gemäß Figur 6, in welcher der Verlauf der Kurven zur Bestimmung der TAM-Werte bei 60 °C dargestellt ist, zeigt Natriumperboratmonohydrat einen ähnlichen Verlauf wie bei 40 °C, jedoch auf deutlich höherem Niveau. Demgegenüber wird aber bei Natriumpercarbonat kein konstantes Niveau erreicht, sondern die Wärmeleistung nimmt nach dem ersten Anstieg weiterhin zu. Hier zeigt sich, dass Natriumperboratmonohydrat gegenüber Natriumpercarbonat wesentlich stabiler ist. Demgemäß besteht bei der Lagerung von Natriumpercarbonat in einem großen Lagerbehälter, wie einem Silo, ein höheres Gefahrenpotential. Zudem liegt die kritische Starttemperatur bei großen Silos wesentlich niedriger als in dem Versuchssilo. Deshalb sollen die Lagerbedingungen sorgfältig kontrolliert werden, was durch das erfindungsgemäße Verfahren in einfacher Weise möglich ist.
2.3 Bestimmung der TAM-Werte von Natriumpercarbonat vor und nach erfindungsgemäßer Lagerung:

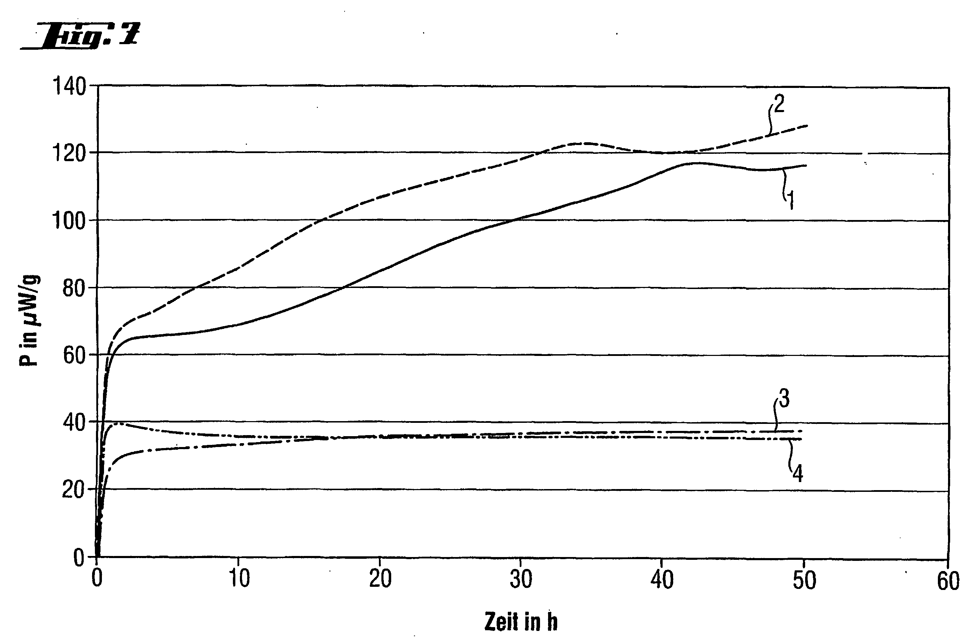

   Figur 7 zeigt die Diagramme der TAM-Messung bei 60 °C der beiden Natriumpercarbonatproben, welche bereits in der Figur 6 dargestellt wurden (Kurven 2 und 3 in Figur 6 entsprechen den Kurven 1 und 2 in Figur 7) sowie TAM-Kurven nach erfindungsgemäßer Lagerung der entsprechenden Produktchargen (Kurven 3 und 4).

Die beiden Proben wurden analog Beispiel 1.3 erfindungsgemäß in dem zuvor beschriebenen Silo gelagert, wobei zwecks Vermeidung eines kritischen Lagerzustands, wie in Figur 3 gezeigt, Trockenluft mit einer Temperatur von 20 °C und einer Taupunktstemperatur von -20 °C in einer Menge von 20 Nl/h durch das Silo geleitet wurden. Nach dieser Lagerung wurden erneut die TAM-Werte bestimmt, und diese sind in Figur 7 als Kurven 3 und 4 dargestellt.

Der Kurvenverlauf zeigt deutlich, dass die innere Stabilität des erfindungsgemäß gelagerten Natriumpercarbonats wesentlich höher ist als die innere Stabilität des nicht-gelagerten Produkts. Eine thermische Behandlung von Natriumpercarbonat führt somit überraschenderweise zu einer Stabilitätserhöhung.

## Patentansprüche

1. Verfahren zur sicheren Lagerung von Natriumpercarbonat in einem gegenüber der Umgebungsatmosphäre im wesentlichen geschlossenen Schüttgutbehälter,
**dadurch gekennzeichnet,**
**dass** man an mindestens einer Stelle innerhalb des in loser Schüttung gelagerten Natriumpercarbonats die Temperatur misst und bei einer Temperatursteigerung im Bereich von 0,5 bis 10 °C pro Tag, insbesondere 1 bis 5 °C pro Tag, Trockenluft mindestens so lange periodisch oder kontinuierlich durch die Schüttung leitet, bis die Temperatursteigerung auf einen Wert von weniger als 1 °C , insbesondere weniger als 0,5°C pro Tag abgesunken ist.

2. Verfahren nach Anspruch 1,
**dadurch gekennzeichnet,**
**dass** man Natriumpercarbonat bei einer mittleren Lagertemperatur von unter 40 °C, insbesondere 15 bis 30 °C, lagert.

3. Verfahren nach Anspruch 1 oder 2,
**dadurch gekennzeichnet,**
**dass** man die Temperaturmessung an mindestens einer zentralen Stelle innerhalb der Schüttung, vorzugsweise an mindestens zwei zentralen in unterschiedlicher Höhe innerhalb des Schüttgutbehälters angeordneten Stellen misst.

4. Verfahren nach einem der Ansprüche 1 bis 3,
**dadurch gekennzeichnet,**
**dass** man eine Trockenluft mit einer Taupunkttemperatur im Bereich von etwa -20 °C bis +5 °C verwendet.

5. Verfahren nach einem der Ansprüche 1 bis 4,
**dadurch gekennzeichnet,**
**dass** man bei einer Temperatursteigerung von 0,5 bis 2 °C pro Tag bei einer mittleren Lagertemperatur unter 25 °C eine spezifische Trockenluftmenge (Taupunkttemperatur τ = -20 °C) von weniger als 0,2 Nm³/ (h · t_{NaPc}) und bei einer mittleren Lagertemperatur im Bereich von 25 bis 30 °C eine spezifische Trockenluftmenge (τ = -20 °C) von 0,1 bis 0,3 Nm³/ (h · t_{NaPc}) durch die Schüttung leitet.

6. Verfahren nach Anspruch 5,
**dadurch gekennzeichnet,**
**dass** man eine Trockenluft mit einer Taupunkttemperatur (τ) von größer -20 °C bis +5 °C verwendet, wobei die Trockenluftmenge pro °C Taupunkterhöhung um 0,01 bis 0,02 Nm³/(h · t_{NaPc}) erhöht wird.

7. Verfahren nach einem der Ansprüche 1 bis 6,
**dadurch gekennzeichnet,**
**dass** man die Lagerung in einem Silobehälter mit einem Volumen von mindestens 10 m³, insbesondere in einem senkrecht stehenden Silo mit 10 bis 250 m³ Schüttgutinhalt durchführt.

8. Verfahren nach einem der Ansprüche 1 bis 7,
**dadurch gekennzeichnet,**
**dass** es sich bei dem Natriumpercarbonat um ein mit mindestens einer stabilisierenden Hüllschicht versehenes granulatförmiges Natriumpercarbonat handelt.

## Claims

1. Process for the safe storage of sodium percarbonate in a bulk container which is substantially closed to the ambient atmosphere,
**characterised in that**
the temperature is measured at at least one position inside the sodium percarbonate stored in bulk and, with an increase in temperature within the range of 0.5 to 10 °C per day, in particular 1 to 5 °C per day, dry air is passed periodically or continuously through the bulk material at least until the increase in temperature has fallen to a value of less than 1 °C, in particular less than 0.5 °C per day.

2. Process according to claim 1,
**characterised in that**
sodium percarbonate is stored at an average storage temperature of below 40 °C, in particular 15 to 30 °C.

3. Process according to claim 1 or 2,
**characterised in that**
the temperature measurement is taken at at least one central position inside the bulk material, preferably at at least two central positions disposed at different levels inside the bulk container.

4. Process according to one of claims 1 to 3,
**characterised in that**
dry air having a dew point temperature within the range of about -20 °C to +5 °C is used.

5. Process according to one of claims 1 to 4,
**characterised in that**
with an increase in temperature of 0.5 to 2 °C per day at an average storage temperature of below 25 °C, a specific quantity of dry air (dew point temperature τ = -20 °C) of less than 0.2 Nm³/ (h · t_{NaPc}) is passed through the bulk material, and at an average storage temperature within the range of 25 to 30 °C a specific quantity of dry air (τ = -20 °C) of 0.1 to 0.3 Nm³/ (h · t_{NaPc}) is passed through the bulk material.

6. Process according to claim 5,
**characterised in that**
dry air having a dew point temperature (τ) of greater than -20 °C to +5 °C is used, the quantity of dry air being increased by 0.01 to 0.02 Nm³/ (h · t_{NaPc}) for each °C increase in the dew point.

7. Process according to one of claims 1 to 6,
**characterised in that**
a silo container having a volume of at least 10 m³, in particular a vertically standing silo having a bulk material content of 10 to 250 m³ is used for storage.

8. Process according to one of claims 1 to 7,
**characterised in that**
the sodium percarbonate is a granular sodium percarbonate provided with at least one stabilising covering layer.

## Revendications

1. Procédé de stockage sécurisé de percarbonate de sodium dans un contenant à produits en vrac pour l'essentiel fermé par rapport à l'atmosphère ambiante,
**caractérisé en ce qu'**
on mesure la température, au moins en un point à l'intérieur du percarbonate de sodium stocké en vrac et on fait passer périodiquement ou continuellement, en présence d'une montée de la température de 0,5 à 10°C par jour, notamment de 1 à 5°C par jour, de l'air sec à travers le produit en vrac au moins jusqu'à ce que la montée de la température soit descendue à une valeur inférieure à 1°C, notamment inférieure à 0,5°C par jour.

2. Procédé selon la revendication 1,
**caractérisé en ce qu'**
on stocke du percarbonate de sodium à une température de stockage moyenne inférieure à 40°C, notamment comprise entre 15 et 30°C.

3. Procédé selon la revendication 1 ou 2,
**caractérisé en ce qu'**
on mesure la température à un point central à l'intérieur du tas, de préférence à au moins deux points centraux disposés à différentes hauteurs à l'intérieur du contenant à produit en vrac.

4. Procédé selon l'une quelconque des revendications 1 à 3,
**caractérisé en ce qu'**
on utilise un air de séchage avec une température de point de rosée comprise entre -20°C et +5°C environ.

5. Procédé selon l'une quelconque des revendications 1 à 4,
**caractérisé en ce qu'**
en présence d'une montée de température de 0,5 à 2°C par jour et d'une température de stockage moyenne inférieure à 25°C, on fait passer une quantité d'air de séchage spécifique (température de point de rosée de τ = -20°C) inférieure à 0,2 Nm³/(h . t_{NaPc}) à travers le produit stocké, et pour une température de stockage moyenne comprise entre 25 et 30°C on fait passer une quantité d'air de séchage (τ = -20°C) comprise entre 0,1 et 0,3 Nm³/(h . t_{NaPc}) à travers le tas.

6. Procédé selon la revendication 5,
**caractérisé en ce qu'**
on utilise un air de séchage avec une température de point de rosée (τ) comprise entre -20°C et +5°C, la quantité d'air de séchage par °C d'augmentation du point de rosée étant augmentée de 0,01 à 0,02 Nm³/(h . t_{NaPc}).

7. Procédé selon l'une quelconque des revendications 1 à 6,
**caractérisé en ce que**
le stockage est réalisé dans un silo d'un volume d'au moins 10 m³, notamment dans un silo vertical d'un contenu de produit en vrac de 10 à 250 m³.

8. Procédé selon l'une quelconque des revendications 1 à 7,
**caractérisé en ce que**
le percarbonate de sodium est un percarbonate de sodium en forme de granulés munis d'au moins une couche d'enrobage stabilisante
